# FASCICULE DE BREVET EUROPEEN

(11) **EP 4 647 339 B1**
(45) Date de publication et mention de la délivrance du brevet: **17.06.2026**
(21) Numéro de dépôt: 25170369.0
(22) Date de dépôt: 14.04.2025
(51) Int. Cl.: B64D 27/355

(54) **ENSEMBLE DE PILES À COMBUSTIBLE POUR SYSTÈME DE PROPULSION D'AÉRONEF**
BRENNSTOFFZELLENBAUGRUPPE FÜR EIN FLUGZEUGANTRIEBSSYSTEM
FUEL CELL ASSEMBLY FOR AN AIRCRAFT PROPULSION SYSTEM

(30) Priorité: 07.05.2024 FR 2404782
(43) Date de publication de la demande: 12.11.2025
(73) Titulaire: AIRBUS OPERATIONS (S.A.S.), 31060 Toulouse (FR)
(72) Inventeur: ROUX, Paul-Emile, 31060 Toulouse Cedex 9 (FR)
(74) Mandataire: Airbus-OPS SAS

(56) Documents cités:
- JP-B2- 6 770 696
- US-A1- 2012 153 076
- US-A1- 2023 211 889
- PIRKANDI JAMASB ET AL: "Thermodynamic performance analysis of three solid oxide fuel cell and gas microturbine hybrid systems for application in auxiliary power units", CLEAN TECHNOLOGIES AND ENVIRONMENTAL POLICY, SPRINGER BERLIN HEIDELBERG, BERLIN/HEIDELBERG, vol. 20, no. 5, 2 May 2018 (2018-05-02), pages 1047 - 1060, XP036525377, ISSN: 1618-954X, [retrieved on 20180502], DOI: 10.1007/S10098-018-1534-2

## Description

### DOMAINE TECHNIQUE

La présente invention concerne un ensemble pour un système de propulsion d'aéronef comportant plusieurs piles à combustible disposées les unes derrière les autres dans un flux d'air, un système de propulsion d'aéronef comportant un tel ensemble et un aéronef comportant au moins un tel système de propulsion.

### ÉTAT DE LA TECHNIQUE ANTÉRIEURE

La propulsion pour les avions de transport ou de passagers est généralement assurée par des systèmes de propulsion. Un tel système de propulsion comporte un moteur à combustion utilisant un carburant à base d'hydrocarbures, ce qui entraîne une certaine empreinte carbone. Le système de propulsion comprend également une nacelle avec une entrée d'air avant dans laquelle est installée une soufflante et de l'air est aspiré par la soufflante dans l'entrée d'air pour alimenter le moteur qui est logé dans la nacelle.

L'air est comprimé dans un compresseur juste derrière l'entrée d'air et injecté dans une chambre de combustion du moteur avec du carburant à base d'hydrocarbures. Les gaz émis par la combustion sont éjectés par une buse d'éjection via une turbine. Le passage des gaz dans la turbine la fait tourner.

Le compresseur et la turbine comportent chacun un étage amont et un étage aval.

L'étage aval du compresseur et l'étage amont de la turbine sont fixés sur un premier arbre de manière à ce que la rotation de l'étage amont de la turbine entraîne l'étage aval du compresseur. De la même manière, l'étage amont du compresseur, l'étage aval de la turbine et la soufflante sont fixés à un deuxième arbre et la rotation de l'étage aval de la turbine fait tourner l'étage amont du compresseur et la soufflante.

Pour réduire la consommation de carburant à base d'hydrocarbures, il est connu d'utiliser l'hydrogène comme carburant et il est également connu d'utiliser des piles à combustible à oxyde solide pour générer un courant électrique.

Dans un tel mode de réalisation, la pile à combustible remplace la chambre de combustion de manière à générer un courant électrique pour faire tourner un moteur électrique et de la chaleur qui est récupérée pour faire tourner une turbine qui entraîne une soufflante.

Un tel système de propulsion utilise le cycle de Brayton et même s'il fonctionne correctement, son efficacité peut être améliorée.

Les documents US2023/211889A1, US2012/153076A1 et PIRKANDI JAMASB ET AL: "Thermodynamic performance analysis of three solid oxide fuel cell and gas microturbine hybrid systems for application in auxiliary power units" (XP036525377) décrivent chacun un ensemble pour un système de propulsion d'un aéronef.

### EXPOSÉ DE L'INVENTION

Un objet de la présente invention est de proposer un ensemble de piles à combustible pour un système de propulsion d'un aéronef qui comporte plusieurs piles à combustible disposées les unes derrière les autres dans un flux d'air.

À cet effet, est proposé un ensemble pour un système de propulsion d'un aéronef, ledit système de propulsion délimitant un canal dans lequel circule un flux d'air, ledit ensemble étant destiné à être disposé dans le flux d'air et comportant :
- un compresseur,
- une turbine en aval du compresseur,
- un arbre secondaire présentant un axe longitudinal secondaire et fixé entre le compresseur et la turbine, et
- au moins deux piles à combustible disposées entre le compresseur et la turbine, les unes derrière les autres le long de l'axe longitudinal secondaire dans le flux d'air sortant du compresseur où le flux d'air sortant de la dernière pile à combustible alimente la turbine et où chaque pile à combustible est alimentée en dihydrogène.

Avec un tel arrangement, le dioxygène chauffe en passant les piles à combustible avant d'arriver à la turbine.

Avantageusement, les températures de fonctionnement des piles à combustible augmentent de l'amont vers l'aval.

Chaque pile à combustible comporte :
- un collecteur d'entrée comportant une admission de dihydrogène,
- un collecteur de sortie comportant une sortie de dihydrogène,
- une pluralité de piles à combustible tubulaires disposées les unes à côté des autres parallèlement à l'axe longitudinal secondaire entre le collecteur d'entrée et le collecteur de sortie, où chaque pile à combustible tubulaire comporte une anode sous la forme d'un tube intérieur, dont une extrémité amont est raccordée de manière fluidique au collecteur d'entrée et dont une extrémité aval est raccordée de manière fluidique au collecteur de sortie, une cathode sous la forme d'un tube poreux extérieur autour de l'anode et entre l'anode et la cathode, un électrolyte.

Avantageusement, chaque collecteur comporte un tore extérieur creux fluidiquement connecté à l'admission de dihydrogène, respectivement à la sortie de dihydrogène, et une pluralité de barres transversales creuses disposées à l'intérieur du tore extérieur et où chaque extrémité de chaque barre transversale est fluidiquement connectée audit tore extérieur et où l'extrémité amont et l'extrémité aval de chaque pile à combustible tubulaire sont raccordées de manière fluidique à une barre transversale du collecteur considéré.

Avantageusement, chaque collecteur comporte un tore intérieur creux et disposé à l'intérieur du tore extérieur, les deux tores intérieurs sont coaxiaux, l'arbre secondaire traverse les deux tores intérieurs, et des barres transversales disposées entre le tore extérieur et le tore intérieur présentent une extrémité fluidiquement connectée audit tore extérieur et une extrémité fluidiquement connectée audit tore intérieur.

Avantageusement, il y a trois piles à combustible, et les températures de fonctionnement des trois piles à combustible de l'amont vers l'aval sont respectivement de l'ordre de 700°C, 800°C et 900°C.

L'invention propose également un système de propulsion d'un aéronef, ledit système de propulsion comportant :
- une nacelle délimitant un canal dans lequel circule un flux d'air,
- une hélice montée mobile dans ou en avant du flux d'air autour d'un axe longitudinal principal parallèle à l'axe longitudinal secondaire,
- une turbine principale montée mobile dans le flux d'air autour de l'axe longitudinal principal,
- un arbre principal s'étendant le long de l'axe longitudinal principal et fixé entre l'hélice et la turbine principale,
- un ensemble selon l'une des variantes précédentes, où le compresseur est en aval de l'hélice, où la turbine est en amont de la turbine principale, et
- un moteur électrique dont l'arbre moteur est l'arbre principal alimenté électriquement par les piles à combustible.

Avantageusement, l'axe longitudinal secondaire et l'axe longitudinal principal sont coaxiaux et l'arbre secondaire est monté mobile autour de l'arbre principal.

L'invention propose également un aéronef comportant au moins un système de propulsion selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La figure 1 est une vue de côté d'un aéronef comportant un système de propulsion selon l'invention,
La figure 2 est une représentation schématique d'un système de propulsion selon un premier mode de réalisation de l'invention,
La figure 3 est une représentation schématique d'un système de propulsion selon un deuxième mode de réalisation de l'invention,
La figure 4 est une vue en perspective d'un empilement de piles à combustible mise en œuvre dans le premier mode de réalisation de l'invention,
La figure 5 est une vue en perspective d'un empilement de piles à combustible mise en œuvre dans le deuxième mode de réalisation de l'invention, et
La figure 6 est une vue en perspective d'une pile à combustible tubulaire à oxyde solide utilisée dans les empilements.

### EXPOSÉ DÉTAILLÉ DE MODES DE RÉALISATION

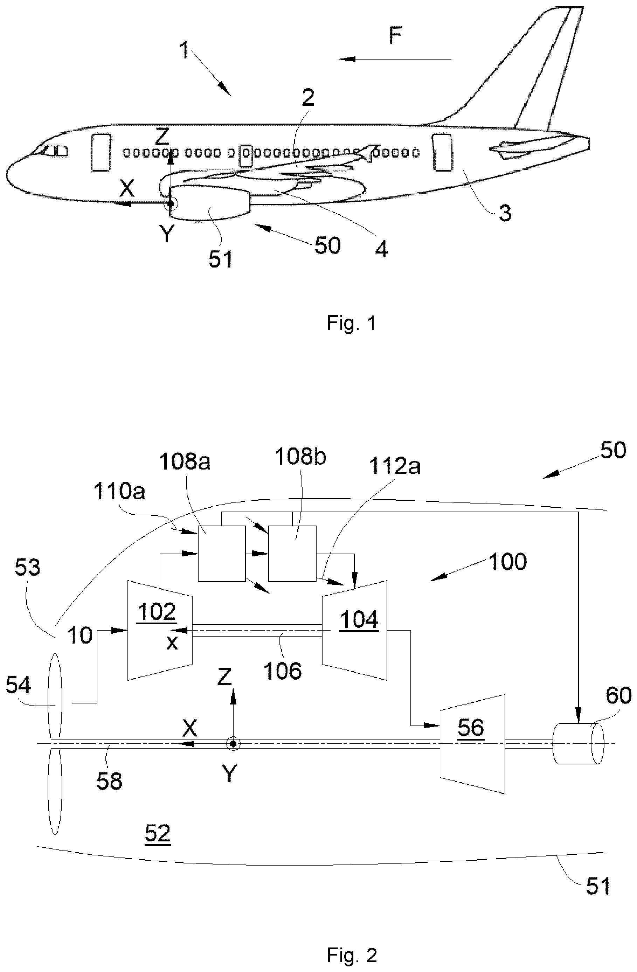

La figure 1 montre un aéronef 1 qui comporte un système de propulsion 50 qui prend ici la forme d'un turboréacteur mais qui pourrait être un turbopropulseur. L'aéronef 1 comporte un fuselage 3 de chaque côté duquel est fixée une aile 2. Sous chaque aile 2, un système de propulsion 50 est fixé par l'intermédiaire d'un mât réacteur 4.

Dans la description qui suit, les termes relatifs à une position sont pris en référence à un aéronef en position normale de vol, c'est-à-dire comme il est représenté sur la figure 1 et les positions « avant » et « arrière » sont prises par rapport à l'avant et l'arrière du turboréacteur et par rapport à la direction d'avancement de l'aéronef 1 lorsque le système de propulsion 50 fonctionne.

Comme décrit ci-dessous, les termes « amont » et « aval » sont pris en référence au flux d'air qui circule dans le système de propulsion 50 de l'avant vers l'arrière. L'amont est alors vers l'avant et l'aval vers l'arrière.

Dans la description qui suit, et par convention, on appelle X l'axe longitudinal principal du système de propulsion 50 qui est parallèle à l'axe longitudinal de l'aéronef 1, on appelle Y l'axe transversal qui est horizontal lorsque l'aéronef 1 est au sol, et Z l'axe vertical qui est vertical lorsque l'aéronef 1 est au sol, ces trois directions X, Y et Z étant orthogonales entre elles.

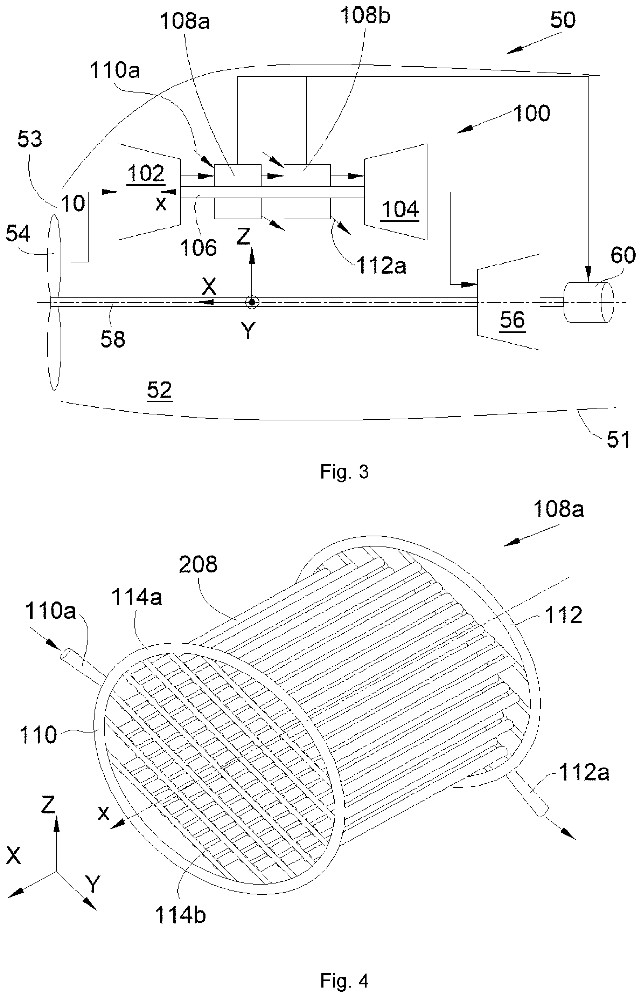

Les figures 2 et 3 montrent des systèmes de propulsion 50 selon deux modes de réalisation de l'invention. Le système de propulsion 50 comporte une nacelle 51 qui entoure un moteur. La nacelle 51 délimite un canal 52 dans lequel circule un flux d'air 10 de l'avant vers l'arrière de la nacelle 51. La nacelle 51 comporte une entrée d'air 53 à l'avant et une tuyère d'éjection à l'arrière.

Le système de propulsion 50 comporte une hélice 54 qui est montée mobile en rotation autour de l'axe longitudinal principal X qui est globalement parallèle au flux d'air 10. Dans le mode de réalisation de l'invention présenté sur les figures 2 et 3, l'hélice 54 est dans la nacelle 51 et donc dans le flux d'air 10 et constitue une soufflante, et le système de propulsion 50 prend la forme d'un turboréacteur. Dans un autre mode de réalisation non représenté, l'hélice 54 peut être une hélice extérieure qui est donc en avant de l'entrée d'air 53 et donc en avant du flux d'air 10 et le système de propulsion 50 prend la forme d'un turbopropulseur.

Le système de propulsion 50 comporte également une turbine principale 56 qui est montée mobile en rotation dans le flux d'air 10 autour de l'axe longitudinal principal X et qui est disposée vers l'arrière de la nacelle 51.

Le système de propulsion 50 comporte également un arbre principal 58 qui s'étend le long de l'axe longitudinal principal X et qui est fixé entre l'hélice 54 et la turbine principale 56. Ainsi, la rotation de la turbine principale 56 entraîne la rotation de l'hélice 54.

Le système de propulsion 50 comporte également un moteur électrique 60 dont l'arbre moteur est l'arbre principal 58 et qui est alimenté électriquement par des piles à combustible 108a-b d'un ensemble 100 selon l'invention.

L'ensemble 100 est disposé dans le flux d'air 10 et il comporte un compresseur 102, une turbine 104 et un arbre secondaire 106 qui s'étend le long d'un axe longitudinal secondaire x parallèle à l'axe longitudinal principal X.

Le compresseur 102 et la turbine 104 sont fixés sur l'arbre secondaire 106 et ces éléments sont montés mobiles en rotation autour de l'axe longitudinal secondaire x. Le compresseur 102 est vers l'avant et la turbine 104 est vers l'arrière, c'est-à-dire en aval du compresseur 102 par rapport au flux d'air 10 et l'arbre secondaire 106 est entre eux.

Le compresseur 102, la turbine 104 et l'arbre secondaire 106 sont disposés dans le flux d'air 10. La rotation de la turbine 104 entraîne la rotation du compresseur 102.

L'ensemble 100 comporte également au moins deux piles à combustible 108a-b disposées en série dans le flux d'air 10, c'est-à-dire les unes derrière les autres le long de l'axe longitudinal secondaire x entre le compresseur 102 et la turbine 104.

Ainsi, le flux d'air 10 sortant du compresseur 102 alimente en dioxygène les piles à combustible 108a-b, en commençant par celle la plus en amont, et le flux d'air 10 sortant de la dernière pile à combustible 108b, c'est-à-dire celle la plus en aval, alimente la turbine 104.

Chaque pile à combustible 108a-b est en outre alimentée en dihydrogène par un réseau de canalisations qui apporte le dihydrogène depuis un réservoir de dihydrogène que l'aéronef 1 présente.

Ainsi, le flux d'air 10 traverse successivement le compresseur 102 où il est comprimé, les piles à combustible 108a-b où il est chauffé, puis il traverse la turbine 104 qu'il fait tourner en entraînant dans le même temps le compresseur 102.

Le compresseur 102 est en aval de l'hélice 54 et la turbine 104 est en amont de la turbine principale 56, ainsi le flux d'air 10 après l'hélice 54 entre dans le compresseur 102 et le flux d'air 10 sortant de la turbine 104 entre dans la turbine principale 56 qu'il fait tourner en entraînant dans le même temps l'hélice 54 par l'intermédiaire de l'arbre principal 58.

La mise en place de plusieurs piles à combustible 108a-b en série permet de plus chauffer l'air du flux d'air 10 avant son arrivée dans les turbines 104 et 56 pour un meilleur rendement. En effet, en augmentant l'enthalpie entre le compresseur 102 et la turbine 104, le rendement du cycle de Brayton est amélioré.

Un tel arrangement est particulièrement performant lorsque les températures de fonctionnement des piles à combustible 108a-b augmentent de l'amont vers l'aval, c'est-à-dire que la température de la pile à combustible 108a en amont est inférieure à la température de la pile à combustible 108b en aval.

La température de fonctionnement d'une pile à combustible correspond à la plage de température à laquelle elle opère pendant son utilisation normale. Lorsqu'une pile à combustible est en fonctionnement, elle produit de l'électricité en catalysant la réaction chimique entre un combustible (comme le dihydrogène) et un oxydant (comme le dioxygène de l'air). Cette réaction se produit à une température spécifique qui dépend du type de pile à combustible.

Selon un mode de réalisation particulier de l'invention, il y a trois piles à combustible 108a-b (seulement deux sont représentées sur les figures 2 et 3), et les températures de fonctionnement des trois piles à combustible 108a-b de l'amont vers l'aval sont respectivement de l'ordre de 700 °C, 800°C et 900°C, avec de préférence une tolérance de +/- 50°C. Ainsi, la température du flux d'air 10 augmente au fur et à mesure qu'il traverse les piles à combustible 108a-b.

Selon un mode de réalisation particulier, la pile à combustible la plus en amont fonctionnant entre 650°C et 750°C est une pile à combustible à oxyde solide à support métallique (MSC), la pile à combustible intermédiaire fonctionnant entre 750°C et 850°C est une pile à combustible à oxyde solide à anode supportée (ASC), et la pile à combustible la plus en aval fonctionnant entre 850°C et 950°C est une pile à combustible à oxyde solide à électrolyte supporté (ESC).

Les figures 2 et 3 montrent deux exemples de piles à combustible 108a mises en œuvre dans l'ensemble 100.

Ainsi, chaque pile à combustible 108a-b comporte un collecteur d'entrée 110 et un collecteur de sortie 112. Le collecteur d'entrée 110 comporte une admission de dihydrogène 110a fluidiquement connectée au réservoir de dihydrogène et par laquelle le dihydrogène arrive à la pile à combustible 108a-b. De la même manière, le collecteur de sortie 112 comporte une sortie de dihydrogène 112a par laquelle le dihydrogène non consommé sort de la pile à combustible 108a-b pour rejoindre par exemple le réservoir de dihydrogène.

La pile à combustible 108a-b comporte également une pluralité de piles à combustible tubulaires 208. Chaque pile à combustible tubulaire 208 prend la forme d'un tube et les piles à combustible tubulaires 208 sont disposées les unes à côté des autres parallèlement à l'axe longitudinal secondaire x entre le collecteur d'entrée 110 et le collecteur de sortie 112. Ici le tube constituant la pile à combustible tubulaire 208 présente une section circulaire, mais cette dernière peut prendre une autre forme comme elliptique, rectangulaire, polygonale, etc.

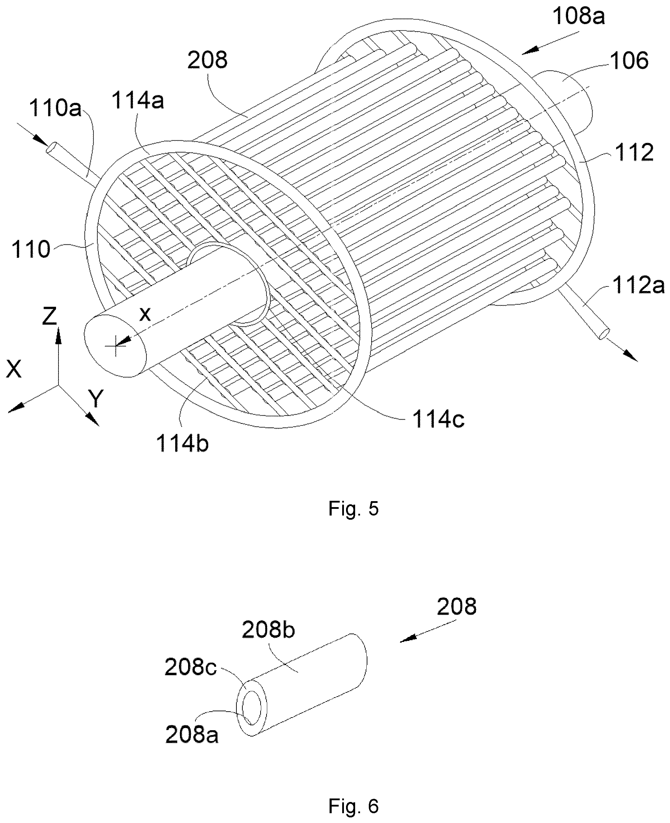

La figure 6 montre un mode de réalisation d'une pile à combustible tubulaire 208 comportant une anode 208a sous la forme d'un tube intérieur creux, dont une extrémité amont est raccordée de manière fluidique au collecteur d'entrée 110 et dont une extrémité aval est raccordée de manière fluidique au collecteur de sortie 112, une cathode 208b sous la forme d'un tube poreux extérieur autour de l'anode 208a et entre l'anode 208a et la cathode 208b, un électrolyte 208c. La cathode 208b est poreuse pour le dioxygène.

L'hydrogène pénètre dans l'anode 208a et la traverse, tandis que l'oxygène de l'air pénètre dans la pile à combustible 208 par les pores à l'intérieur de la cathode 208b qui est entourée par le flux d'air 10. Dans la pile à combustible 208, la réaction de réduction de l'oxygène se produit dans la cathode poreuse 208b en acceptant des électrons et en produisant des ions oxyde, qui traversent l'électrolyte 208c étanche au gaz jusqu'à l'anode 208a. L'hydrogène s'oxyde à l'anode 208a en acceptant les ions oxyde et en produisant des électrons, qui passent à la cathode 208b par un circuit électrique externe.

À cette fin, pour chaque pile à combustible tubulaire 208, il est prévu un contact électrique relié électriquement à l'anode 208a et un contact électrique relié électriquement à la cathode 208b. Les différents contacts électriques sont connectés de manière à fournir un courant électrique pouvant faire fonctionner le moteur électrique 60.

Ici, chaque collecteur 110, 112 comporte un tore extérieur 114a formé d'un tube creux et fluidiquement connecté à l'admission de dihydrogène 110a ou à la sortie de dihydrogène 112a.

Chaque collecteur 110, 112 comporte également une pluralité de barres transversales 114b également creuses et qui sont disposées à l'intérieur du tore extérieur 114a de manière à ce que chaque extrémité de chaque barre transversale 114b soit fluidiquement connectée au tore extérieur 114a de manière à assurer une continuité fluidique entre l'admission de dihydrogène 110a ou la sortie de dihydrogène 112a et l'intérieur de chaque barre transversale 114b à travers l'intérieur du tube creux formant le tore extérieur 114a.

Afin d'assurer le passage du dihydrogène dans chaque pile à combustible tubulaire 208, l'extrémité amont de chaque pile à combustible tubulaire 208 est raccordée de manière fluidique à une barre transversale 114b du collecteur d'entrée 110 et l'extrémité aval de chaque pile à combustible tubulaire 208 est raccordée de manière fluidique à une barre transversale 114b du collecteur de sortie 112.

Dans le mode de réalisation de la figure 5, chaque collecteur 110, 112 comporte un tore intérieur 114c qui est constitué d'un tube creux et qui est disposé à l'intérieur du tore extérieur 114a, ici de manière coaxiale par rapport au tore extérieur 114a.

Les deux tores intérieurs 114c sont coaxiaux et l'arbre secondaire 106 traverse les deux tores intérieurs 114c de manière à monter la pile à combustible 108a-b autour de l'arbre secondaire 106 pour un gain de place, contrairement au mode de réalisation de la figure 4 où la pile à combustible 108a-b doit être à distance de l'arbre secondaire 106.

Les barres transversales 114b qui auraient pu être dans le tore intérieur 114c sont retirées et les barres transversales 114b qui sont disposées entre le tore extérieur 114a et le tore intérieur 114c présentent une extrémité fluidiquement connectée au tore extérieur 114a et une extrémité fluidiquement connectée au tore intérieur 114c.

Dans les modes de réalisation des figures 2 et 3, l'axe longitudinal principal X et l'axe longitudinal secondaire x peuvent être coaxiaux et l'arbre secondaire 106 est alors monté mobile en rotation autour de l'arbre principal 58 et l'arbre principal 58 est donc à l'intérieur de l'arbre secondaire 106.

Dans le mode de réalisation de la figure 5, l'arbre principal 58 passe également à travers les tores intérieurs 114c.

## Revendications

1. Ensemble (100) pour un système de propulsion (50) d'un aéronef (1), ledit système de propulsion (50) délimitant un canal (52) dans lequel circule un flux d'air (10), ledit ensemble (100) étant destiné à être disposé dans le flux d'air (10) et comportant :
- un compresseur (102),
- une turbine (104) en aval du compresseur (102),
- un arbre secondaire (106) présentant un axe longitudinal secondaire (x) et fixé entre le compresseur (102) et la turbine (104), et
- au moins deux piles à combustible (108a-b) disposées entre le compresseur (102) et la turbine (104), les unes derrière les autres le long de l'axe longitudinal secondaire (x) dans le flux d'air (10) sortant du compresseur (102) où le flux d'air (10) sortant de la dernière pile à combustible (108a-b) alimente la turbine (104) et où chaque pile à combustible (108a-b) est alimentée en dihydrogène,
**caractérisé en ce que** chaque pile à combustible (108a-b) comporte :
- un collecteur d'entrée (110) comportant une admission de dihydrogène (110a),
- un collecteur de sortie (112) comportant une sortie de dihydrogène (112a),
- une pluralité de piles à combustible tubulaires (208) disposées les unes à côté des autres parallèlement à l'axe longitudinal secondaire (x) entre le collecteur d'entrée (110) et le collecteur de sortie (112), où chaque pile à combustible tubulaire (208) comporte une anode (208a) sous la forme d'un tube intérieur, dont une extrémité amont est raccordée de manière fluidique au collecteur d'entrée (110) et dont une extrémité aval est raccordée de manière fluidique au collecteur de sortie (112), une cathode (208b) sous la forme d'un tube poreux extérieur autour de l'anode (208a) et entre l'anode (208a) et la cathode (208b), un électrolyte (208c).

2. Ensemble (100) selon la revendication 1, **caractérisé en ce que** les températures de fonctionnement des piles à combustible (108a-b) augmentent de l'amont vers l'aval.

3. Ensemble (100) selon l'une des revendications 1 ou 2, **caractérisé en ce que** chaque collecteur (110, 112) comporte un tore extérieur (114a) creux fluidiquement connecté à l'admission de dihydrogène (110a), respectivement à la sortie de dihydrogène (112a), et une pluralité de barres transversales (114b) creuses disposées à l'intérieur du tore extérieur (114a) et où chaque extrémité de chaque barre transversale (114b) est fluidiquement connectée audit tore extérieur (114a) et où l'extrémité amont et l'extrémité aval de chaque pile à combustible tubulaire (208) sont raccordées de manière fluidique à une barre transversale (114b) du collecteur (110, 112) considéré.

4. Ensemble (100) selon la revendication 3, **caractérisé en ce que** chaque collecteur (110, 112) comporte un tore intérieur (114c) creux et disposé à l'intérieur du tore extérieur (114a), **en ce que** les deux tores intérieurs (114c) sont coaxiaux, **en ce que** l'arbre secondaire (106) traverse les deux tores intérieurs (114c), et **en ce que** des barres transversales (114b) disposées entre le tore extérieur (114a) et le tore intérieur (114c) présentent une extrémité fluidiquement connectée audit tore extérieur (114a) et une extrémité fluidiquement connectée audit tore intérieur (114c).

5. Ensemble (100) selon l'une des revendications 1 à 4, **caractérisé en ce qu'**il y a trois piles à combustible (108a-b), et **en ce que** les températures de fonctionnement des trois piles à combustible (108a-b) de l'amont vers l'aval sont respectivement de l'ordre de 700°C, 800°C et 900°C.

6. Système de propulsion (50) d'un aéronef (1), ledit système de propulsion (50) comportant :
- une nacelle (51) délimitant un canal (52) dans lequel circule un flux d'air (10),
- une hélice (54) montée mobile dans ou en avant du flux d'air (10) autour d'un axe longitudinal principal (X) parallèle à l'axe longitudinal secondaire (x),
- une turbine principale (56) montée mobile dans le flux d'air (10) autour de l'axe longitudinal principal (X),
- un arbre principal (58) s'étendant le long de l'axe longitudinal principal (X) et fixé entre l'hélice (54) et la turbine principale (56),
- un ensemble (100) selon l'une des revendications 1 à 5, où le compresseur (102) est en aval de l'hélice (54), où la turbine (104) est en amont de la turbine principale (56),
- un moteur électrique (60) dont l'arbre moteur est l'arbre principal (58) alimenté électriquement par les piles à combustible (108a-b).

7. Système de propulsion (50) selon la revendication 6, **caractérisé en ce que** l'axe longitudinal secondaire (x) et l'axe longitudinal principal (X) sont coaxiaux et **en ce que** l'arbre secondaire (106) est monté mobile autour de l'arbre principal (58).

8. Aéronef (1) comportant au moins un système de propulsion (50) selon l'une des revendications 6 ou 7.

## Patentansprüche

1. Anordnung (100) für ein Antriebssystem (50) eines Luftfahrzeugs (1), wobei das Antriebssystem (50) einen Kanal (52) begrenzt, in dem ein Luftstrom (10) zirkuliert, wobei die Anordnung (100) dazu bestimmt ist, in dem Luftstrom (10) angeordnet zu werden, und Folgendes umfasst:
- einen Verdichter (102),
- eine Turbine (104) stromab des Verdichters (102),
- eine Sekundärwelle (106), die eine Sekundärlängsachse (x) aufweist und zwischen dem Verdichter (102) und der Turbine (104) befestigt ist, und
- mindestens zwei Brennstoffzellen (108a-b), die zwischen dem Verdichter (102) und der Turbine (104) hintereinander entlang der Sekundärlängsachse (x) in dem aus dem Verdichter (102) austretenden Luftstrom (10) angeordnet sind, der wobei der aus der letzten Brennstoffzelle (108a-b) austretende Luftstrom (10) die Turbine (104) versorgt und wobei jede Brennstoffzelle (108a-b) mit Wasserstoff versorgt wird,
**dadurch gekennzeichnet, dass** jede Brennstoffzelle (108ab) Folgendes umfasst:
- einen Eintrittsverteiler (110), der einen Wasserstoffeinlass (110a) umfasst,
- einen Austrittsverteiler (112), der einen Wasserstoffauslass (112a) umfasst,
- eine Mehrzahl von röhrenförmigen Brennstoffzellen (208), die nebeneinander parallel zu der Sekundärlängsachse (x) zwischen dem Eintrittsverteiler (110) und dem Austrittsverteiler (112) angeordnet sind, wobei jede röhrenförmige Brennstoffzelle (208) eine Anode (208a) in Form eines Innenrohrs, von dem ein stromaufwärtiges Ende fluidisch mit dem Eintrittsverteiler (110) verbunden ist und von dem ein stromabwärtiges Ende fluidisch mit dem Austrittsverteiler (112) verbunden ist, eine Kathode (208b) in Form eines porösen Außenrohrs um die Anode (208a) herum und zwischen der Anode (208a) und der Kathode (208b) einen Elektrolyten (208c) umfasst.

2. Anordnung (100) nach Anspruch 1, **dadurch gekennzeichnet, dass** die Betriebstemperaturen der Brennstoffzellen (108a-b) von stromauf nach stromab steigen.

3. Anordnung (100) nach einem der Ansprüche 1 oder 2, **dadurch gekennzeichnet, dass** jeder Verteiler (110, 112) einen hohlen äußeren Torus (114a), der fluidisch an den Wasserstoffeinlass (110a) bzw. an den Wasserstoffauslass (112a) angeschlossen ist, und eine Mehrzahl von hohlen Querstäben (114b), die im Inneren des äußeren Torus (114a) angeordnet sind, umfasst, und wobei jedes Ende jedes Querstabs (114b) fluidisch an den äußeren Torus (114a) angeschlossen ist und wobei das stromaufwärtige Ende und das stromabwärtige Ende jeder röhrenförmigen Brennstoffzelle (208) fluidisch an einen Querstab (114b) des betrachteten Verteilers (110, 112) angeschlossen sind.

4. Anordnung (100) nach Anspruch 3, **dadurch gekennzeichnet, dass** jeder Verteiler (110, 112) einen hohlen inneren Torus (114c) umfasst, der im Inneren des äußeren Torus (114a) angeordnet ist, dass die beiden inneren Tori (114c) koaxial sind, dass die Sekundärwelle (106) durch die beiden inneren Tori (114c) verläuft und dass zwischen dem äußeren Torus (114a) und dem inneren Torus (114c) angeordnete Querstäbe (114b) ein fluidisch an den äußeren Torus (114a) angeschlossenes Ende und ein fluidisch an den inneren Torus (114c) angeschlossenes Ende aufweisen.

5. Anordnung (100) nach einem der Ansprüche 1 bis 4, **dadurch gekennzeichnet, dass** drei Brennstoffzellen (108a-b) vorhanden sind und dass die Betriebstemperaturen der drei Brennstoffzellen (108a-b) von stromauf nach stromab jeweils in der Größenordnung von 700 °C, 800 °C und 900 °C liegen.

6. Antriebssystem (50) eines Luftfahrzeugs (1), wobei das Antriebssystem (50) Folgendes umfasst:
- eine Gondel (51), die einen Kanal (52) begrenzt, in dem ein Luftstrom (10) zirkuliert,
- einen Propeller (54), der in oder vor dem Luftstrom (10) um eine zu der Sekundärlängsachse (x) parallele Hauptlängsachse (X) beweglich gelagert ist,
- eine Hauptturbine (56), die in dem Luftstrom (10) um die Hauptlängsachse (X) beweglich gelagert ist,
- eine Hauptwelle (58), die sich entlang der Hauptlängsachse (X) erstreckt und zwischen dem Propeller (54) und der Hauptturbine (56) befestigt ist,
- eine Anordnung (100) nach einem der Ansprüche 1 bis 5, wobei sich der Verdichter (102) stromab des Propellers (54) befindet, wobei sich die Turbine (104) stromauf der Hauptturbine (56) befindet,
- einen Elektromotor (60), dessen Motorwelle die Hauptwelle (58) ist, die durch die Brennstoffzellen (108a-b) elektrisch versorgt wird.

7. Antriebssystem (50) nach Anspruch 6, **dadurch gekennzeichnet, dass** die Sekundärlängsachse (x) und die Hauptlängsachse (X) koaxial sind und dass die Sekundärwelle (106) um die Hauptwelle (58) beweglich gelagert ist.

8. Luftfahrzeug (1), das mindestens ein Antriebssystem (50) nach einem der Ansprüche 6 oder 7 umfasst.

## Claims

1. Assembly (100) for a propulsion system (50) of an aircraft (1), said propulsion system (50) delimiting a channel (52) in which an airflow (10) circulates, said assembly (100) being intended to be arranged in the airflow (10) and comprising:
- a compressor (102),
- a turbine (104) downstream of the compressor (102),
- a secondary shaft (106), which has a secondary longitudinal axis (x) and is fastened between the compressor (102) and the turbine (104), and
- at least two fuel cells (108a-b) arranged between the compressor (102) and the turbine (104), one behind the other along the secondary longitudinal axis (x) in the airflow (10) leaving the compressor (102), wherein the airflow (10) leaving the last fuel cell (108a-b) supplies the turbine (104) and wherein each fuel cell (108a-b) is supplied with dihydrogen,
**characterized in that** each fuel cell (108a-b) comprises:
- an inlet manifold (110) comprising a dihydrogen inlet (110a),
- an outlet manifold (112) comprising a dihydrogen outlet (112a),
- a plurality of tubular fuel cells (208) arranged alongside one another parallel to the secondary longitudinal axis (x) between the inlet manifold (110) and the outlet manifold (112), wherein each tubular fuel cell (208) comprises an anode (208a) in the form of an inner tube, an upstream end of which is fluidically connected to the inlet manifold (110) and a downstream end of which is fluidically connected to the outlet manifold (112), a cathode (208b) in the form of a porous outer tube around the anode (208a), and between the anode (208a) and the cathode (208b), an electrolyte (208c).

2. Assembly (100) according to Claim 1, **characterized in that** the operating temperatures of the fuel cells (108a-b) increase from upstream to downstream.

3. Assembly (100) according to either of Claims 1 and 2, **characterized in that** each manifold (110, 112) comprises a hollow outer torus (114a) fluidically connected to the dihydrogen inlet (110a) and to the dihydrogen outlet (112a), respectively, and a plurality of hollow transverse bars (114b) arranged inside the outer torus (114a) and wherein each end of each transverse bar (114b) is fluidically connected to said outer torus (114a) and wherein the upstream end and the downstream end of each tubular fuel cell (208) are fluidically connected to a transverse bar (114b) of the manifold (110, 112) in question.

4. Assembly (100) according to Claim 3, **characterized in that** each manifold (110, 112) comprises a hollow inner torus (114c) arranged inside the outer torus (114a), **in that** the two inner tori (114c) are coaxial, **in that** the secondary shaft (106) passes through the two inner tori (114c), and **in that** transverse bars (114b) arranged between the outer torus (114a) and the inner torus (114c) have one end fluidically connected to said outer torus (114a) and one end fluidically connected to said inner torus (114c).

5. Assembly (100) according to one of Claims 1 to 4, **characterized in that** there are three fuel cells (108a-b), and **in that** the operating temperatures of the three fuel cells (108a-b) from upstream to downstream are of the order of 700°C, 800°C and 900°C, respectively.

6. Propulsion system (50) for an aircraft (1), said propulsion system (50) comprising:
- a nacelle (51) delimiting a channel (52) in which an airflow (10) circulates,
- a propeller (54) mounted so as to be able to move, in or upstream of the airflow (10), about a main longitudinal axis (X) parallel to the secondary longitudinal axis (x),
- a main turbine (56) mounted so as to be able to move, in the airflow (10), about the main longitudinal axis (X),
- a main shaft (58), which extends along the main longitudinal axis (X) and is fastened between the propeller (54) and the main turbine (56),
- an assembly (100) according to one of Claims 1 to 5, wherein the compressor (102) is downstream of the propeller (54), wherein the turbine (104) is upstream of the main turbine (56),
- an electric motor (60), the motor shaft of which is the main shaft (58) electrically powered by the fuel cells (108a-b).

7. Propulsion system (50) according to Claim 6, **characterized in that** the secondary longitudinal axis (x) and the main longitudinal axis (X) are coaxial and **in that** the secondary shaft (106) is mounted so as to be able to move about the main shaft (58).

8. Aircraft (1) comprising at least one propulsion system (50) according to either of Claims 6 and 7.
